# EUROPÄISCHE PATENTANMELDUNG

(11) **EP 1 316 350 A1**
(43) Veröffentlichungstag der Anmeldung: **04.06.2003**
(21) Anmeldenummer: 02025665.7
(22) Anmeldetag: 20.11.2002
(51) Int. Cl.: B01D 53/14, B01D 53/86

(54) **Verfahren und Anlage zur Reinigung von Faulgasen**

(30) Priorität: 30.11.2001 DE 10158804
(71) Anmelder: FRAUNHOFER-GESELLSCHAFT ZUR FÖRDERUNG DER ANGEWANDTEN FORSCHUNG E.V., 80636 München (DE); Siloxa Engineering AG, 45327 Essen (DE)
(72) Erfinder: Schwerdt, Peter, Dipl.Ing., 46535 Dinslaken (DE); Doczyck, Wolfgang, Dipl.Ing., 46047 Oberhausen (DE)
(74) Vertreter: Gagel, Roland, Dr.

(57) **Zusammenfassung**

Die vorliegende Erfindung betrifft ein Verfahren sowie eine Anlage zur Reinigung von Faulgasen, bei denen das zu reinigende Rohgas (1) einer Gaswäsche (3) unterzogen wird. Bei dem Verfahren werden vor Durchführung der Gaswäsche (3) höhermolekulare Siliziumverbindungen im Rohgas (1) katalytisch in niedermolekulare Siliziumverbindungen umgewandelt und die anschließende Gaswäsche mit einem polaren Lösungsmittel durchgeführt.

Das vorliegende Verfahren sowie die zugehörige Anlage ermöglichen die kostengünstige Entfernung von Siloxanen aus Faulgasen der unterschiedlichsten Gaszusammensetzung.

## Beschreibung

### Technisches Anwendungsgebiet

Die vorliegende Erfindung betrifft ein Verfahren sowie eine Anlage zur Reinigung von Faulgasen, bei denen das zu reinigende Rohgas einer Gaswäsche unterzogen wird.

Methanhaltige Faulgase entstehen bspw. in Kläranlagen, Biogasanlagen und Deponien durch anaerobe Umsetzung organischer Abfallstoffe. Sie enthalten neben Methan, Stickstoff und Kohlendioxid als Hauptbestandteile meist auch nennenswerte Anteile an halogenierten und nichthalogenierten Kohlenwasserstoffverbindungen sowie verschiedene Siliziumverbindungen unterschiedlicher Kettenlänge, insbesondere höher- und niedermolekulare Siloxane. Faulgase aus Kläranlagen enthalten hierbei überwiegend höhermolekulare, unpolare Siliziumverbindungen, während Deponiegas auch niedermolekulare Abbauprodukte, u. a. Dimethylsilandiol und Trimethylsilanol, aufweist, die eher polaren Charakter besitzen. Die Gase sind außerdem mit Wasserdampf gesättigt.

Seit langem wird Faulgas zum Betrieb von Gasmotoren in Kraft-Wärme-Kopplungsanlagen eingesetzt. Diese Nutzung der Faulgase bereitet jedoch mit dem in den letzten Jahren zunehmenden Anteil an Siloxanen in den Faulgasen Probleme, da diese Siliziumverbindungen starken Verschleiß, hohen Wartungsaufwand sowie Schäden an den Gasmotoren verursachen. Die Siloxane führen im Verbrennungsprozess zur Bildung von mineralischen Siliziumverbindungen. Diese können als Stäube im Zylinderraum sowie im Schmieröl wie ein Schleifmittel wirken und sich im Verbrennungsraum als glasartige Schichten anlagern, die gelegentlich abplatzen und große Schäden an Zylindern, Ventilen, Turboladern und Katalysatoren auslösen. Die Reinigung von Faulgasen zur Entfernung der Siloxane spielt daher für die weitere Nutzung der Faulgase eine wesentliche Rolle.

### Stand der Technik

Für die Reinigung von Faulgasen, die eine Vielzahl kondensierbarer und nichtkondensierbarer, polarer und unpolarer Substanzen enthalten, sind unterschiedliche Verfahren bekannt. Die Aufgabe der meisten bekannten Reinigungsverfahren für Faulgase ist aufgrund der obigen Problematik die Entfernung der Siloxane aus dem Rohgas.

Eine bekannte Möglichkeit zur Reinigung von Faulgasen besteht darin, das Rohgas einer Gaswäsche zu unterziehen. Allerdings lassen sich unpolare Siloxane mit einem wässrigen Waschverfahren nicht entfernen. Nichtwässrige Waschflüssigkeiten sind jedoch, abgesehen von Heizöl, sehr kostenintensiv oder benötigen eine aufwendige Regenerierung. Eine Heizölwäsche ist wiederum nur in Sonderfällen einsetzbar, in denen die Zusammensetzung des Rohgases in erster Linie in Heizöl lösliche Siloxane aufweist. Grundsätzlich bereitet beim Einsatz unpolarer Waschflüssigkeiten die schlechte Abreinigung der polaren Siloxane aus dem Faulgas Probleme.

Eine weitere Technik zur Reinigung von Faulgasen besteht im Einsatz von Aktivkohlefiltern, Molekularsieben oder Silicagel. Mit diesen adsorptiven Reinigungsverfahren lassen sich prinzipiell Siloxane aus dem Rohgas entfernen. Jedoch wird in der Praxis nur ein Bruchteil der theoretisch erzielbaren Beladungskapazität der Adsorbentien erreicht. Ursache hierfür sind die weiteren konkurrierenden Gasbestandteile des Rohgases wie Wasserdampf und Kohlenwasserstoffe, die die Adsorbierbarkeit der Siloxane in den Adsorbentien drastisch einschränken. Insbesondere die leicht flüchtigen, niedermolekularen Siloxane brechen sehr früh durch. Molekularsiebe und Silicagel besitzen außerdem eine sehr viel höhere Affinität für Wasserdampf als für Siloxane.
Wird der Wassergehalt des Rohgases durch eine vorgeschaltete Trocknung gesenkt, erhöhen sich der Aufwand und die Investitionskosten. Die leichtflüchtigen Lösemittel sind außerdem praktisch kaum mit vertretbarem Aufwand mittels Kältetrocknung ausreichend zu entfernen. Druckwechseladsorption und Tiefkältekondensation bedingen hohe Investitions- und Betriebskosten.

Eine Zusammenstellung dieser bisher bekannten und erprobten Reinigungsverfahren für Faulgase ist der Veröffentlichung von R. Hohmann, Verfahren zur Siloxanabscheidung im Vergleich, Vortrag ATV/DVWK, Essen 2001 zu entnehmen.

Zusammenfassend weisen alle bisher bekannten Verfahren zur Reinigung von Faulgasen in der Praxis Probleme oder Nachteile auf, die in ungenügender Reinigungsleistung, Störanfälligkeit oder hohen Investitions- und Betriebskosten begründet liegen.

Ausgehend von diesem Stand der Technik besteht die Aufgabe der vorliegenden Erfindung darin, ein Verfahren sowie eine Anlage zur Reinigung von Faulgasen anzugeben, die eine zufrieden stellende und wirtschaftliche Entfernung von Siliziumverbindungen aus Faulgasen ermöglichen. Insbesondere sollen das Verfahren sowie die Anlage sowohl für Klär- als auch für Deponiegas gleichermaßen wirtschaftlich einsetzbar sein.

### Darstellung der Erfindung

Die Aufgabe wird mit dem Verfahren sowie der Anlage gemäß den Patentansprüchen 1 bzw. 10 gelöst. Vorteilhafte Ausgestaltungen des Verfahrens sowie der Reinigungsanlage sind Gegenstand der Unteransprüche.

Bei dem vorliegenden Verfahren zur Reinigung von Faulgasen werden im Rohgas enthaltene höhermolekulare Siliziumverbindungen, insbesondere Siloxane, zunächst katalytisch in niedermolekulare Siliziumverbindungen umgewandelt. Die durch diese katalytische Umwandlung erhaltenen niedermolekularen Siliziumverbindungen weisen überwiegend einen polaren Charakter auf oder können ggf. als nicht mehr flüchtige bzw. feste Substanzen anfallen. Das aus dieser katalytischen Umwandlung hervorgehende Rohgas wird anschließend einer Gaswäsche mit einem polaren Lösungsmittel unterzogen, in dem die polaren Siliziumverbindungen ausgewaschen werden. Vorzugsweise wird diese Gaswäsche mit Wasser als polarem Lösungsmittel durchgeführt.

Das auf diese Weise erhaltene Reingas weist einen erheblich verringerten Anteil an Siloxanen auf, so dass es für eine weitere Nutzung in Gasmotoren ohne die Gefahr einer frühzeitigen Schädigung dieser Motoren eingesetzt werden kann.

Ein Vorteil des vorliegenden Verfahrens besteht darin, dass durch die katalytische Umwandlung der höhermolekularen Siliziumverbindungen in niedermolekulare Siliziumverbindungen ein höherer Anteil an Siliziumverbindungen mit der anschließenden Gaswäsche entfernt werden kann. Das Verfahren eignet sich sowohl für Klär- als auch für Deponiegas, die unterschiedliche Verhältnisse von höhermolekularen zu niedermolekularen Siloxanen aufweisen. Durch die Möglichkeit der Durchführung der Gaswäsche mit Prozesswasser werden die Kosten für das vorliegende Reinigungsverfahren gegenüber Verfahren mit anderen teuren Lösemitteln deutlich reduziert. Das Verfahren lässt sich mit Standardkomponenten durchführen und erfordert weder Tiefkühleinrichtungen noch Hochdruckanlagen.

Das Grundprinzip des vorliegenden Verfahrens sowie der zugehörigen Reinigungsanlage besteht in einer Kombination von katalytischer Umwandlung der Siliziumverbindungen mit einer Gaswäsche. Mit geeigneten Katalysatoren gelingt es, die unpolaren, höhermolekularen Siliziumverbindungen, wie beispielsweise Octamethylcyclotetrasiloxan (D4) oder Decamethylcyclopentasiloxan (D5) in niedermolekulare Verbindungen mit überwiegend polarem Charakter, beispielsweise Silanol, zu überführen. Obwohl die niedermolekularen Verbindungen im Allgemeinen eine noch größere Flüchtigkeit besitzen und damit noch schlechter mit einer evtl. nachgeschalteten Aktivkohlefilterstufe abzureinigen sind, ist dieses Vorgehen von Vorteil, da die bei der Umwandlung anteilig gebildeten polaren Substanzen in nennenswerter Weise wasserlöslich sind. Damit können sie auf einfache Weise in einem Waschprozess, bspw. mit Wasser, entfernt werden.

In einer vorteilhaften Ausführungsform des vorliegenden Verfahrens wird die Gaswäsche mit Kaltwasser, vorzugsweise mit einer Temperatur unterhalb von 10°C, durchgeführt. Durch diese Wäsche mit Kaltwasser wird die Abscheideleistung aufgrund der niedrigen Temperaturen und des damit verbundenen geringeren Dampfdruckes der leichtflüchtigen SiloxanKomponenten erhöht. Der Einsatz von Kaltwasser hat die weitere vorteilhafte Wirkung, dass dadurch gleichzeitig der Taupunkt des Rohgasstromes bis auf das Niveau der Wassertemperatur abgesenkt wird, so dass das Rohgas entsprechend entfeuchtet wird. Ein bei anderen Verfahren zur Kältetrocknung erforderlicher Gaskühler wird somit beim vorliegenden Verfahren durch die Gaswäsche mit Kaltwasser ersetzt.

In Fällen, in denen der Anteil an Siloxanen in dem nach der Gaswäsche erhaltenen gereinigten Rohgas weiter gesenkt werden soll, kann dieses Gas auch einer adsorptiven Nachreinigung unterzogen werden. Diese Nachreinigung erfolgt vorzugsweise durch ein oder mehrere nachgeschaltete Aktivkohlefilter. Die hierfür erforderliche Trocknung des Gases auf eine relative Feuchte von weniger als 50 - 60 % lässt sich durch geringfügige Erwärmung des Gasstroms nach der Gaswäsche erreichen, bei der bereits durch Kaltwassereinsatz eine Entfeuchtung des Gases erreicht werden kann. Dadurch werden signifikant höhere Beladungskapazitäten der Aktivkohlefilter erreicht, da unter anderem der Siloxangehalt durch die vorausgehende Gasreinigung bereits erheblich reduziert ist.

Zur katalytischen Umwandlung der höhermolekularen in niedermolekulare Siliziumverbindungen wird das Rohgas vorzugsweise durch einen entsprechenden Katalysator geleitet. Als Katalysatormaterialien können unterschiedliche Stoffe eingesetzt werden, die die beabsichtigte Umwandlung fördern. Als geeignet hat sich hierbei vorbehandelte Aktivkohle erwiesen, mit der eine signifikante Umwandlungsrate erzielt werden kann. Die Vorbehandlung kann bspw. durch Beaufschlagung der Aktivkohle mit dem Rohgas bis zur vollständigen Beladung erfolgen. Weiterhin ist es selbstverständlich möglich, die Aktivkohle auch mit anderen Stoffen zu mischen oder zu dotieren, die die gewünschte katalytische Reaktion fördern.

In einer weiteren Ausführungsform des vorliegenden Verfahrens wird ein Teil des nach der Gaswäsche erhaltenen gereinigten Rohgases wieder in den Katalysator rückgeführt, um den Katalysator sowie die nachgeschaltete Gaswäsche erneut zu durchlaufen. Auf diese Weise wird eine weitere Reduzierung der im gereinigten Rohgas enthaltenen Siloxane erreicht.

In Weiterbildung des vorliegenden Verfahrens kann das Rohgas selbstverständlich vor der Durchführung der katalytischen Umwandlung auch einer Vorwäsche unterzogen werden, um bereits enthaltene polare Siliziumverbindungen auszuwaschen. Bei einer Durchführung dieser Vorwäsche mit Kaltwasser mit einer Temperatur um 0°C wird das Rohgas zudem gleichzeitig auf einen Taupunkt von wenig über 0°C abgekühlt. Dabei wird es bereits durch partielle Kondensation entfeuchtet und vorgereinigt sowie durch Absorption von allen wasserlöslichen Inhaltsstoffen befreit.

Die bei entsprechenden Weiterbildungen des Verfahrens realisierte Kombination von Katalysator(en), Gaswäscher(n) und Aktivkohlereinigung bedingt zwar eine Zunahme der Zahl der Apparate, jedoch bei geringem technischen Aufwand. So kann der gesamte Reinigungsprozess bereits bei normalem Faulgasdruck, in der Regel etwa 30*10²Pa (30 mbar), und moderaten Temperaturen im Bereich zwischen 0°C und 100°C ablaufen, so dass Standardkomponenten verwendet werden können und der Energieaufwand vertretbar niedrig bleibt. Das vorliegende Verfahren ermöglicht somit auch in weiteren Ausbaustufen, Siloxanverbindungen aus den verschiedensten Faulgasen mittels einfacher Reinigungsstufen zu entfernen, die geringen technischen Aufwand und geringe Betriebskosten verursachen. In besonderen Fällen kann es zur Erzielung der Reinigungsaufgabe auch vorteilhaft sein, die katalytische Reaktion bei höheren Temperaturen, bspw. bis 400° C, durchzuführen.

Die Reinigungsanlage zur Durchführung des vorliegenden Verfahrens besteht in der Grundausstattung zumindest aus einer Gaswäscheeinheit, der zumindest ein Katalysator für die katalytische Umwandlung höhermolekularer in niedermolekulare Siliziumverbindungen vorgeschaltet ist. Weitere Ausbaustufen dieser Reinigungsanlage, bspw. mit einer Vorwäscheeinheit oder nachgeschalteten Aktivkohlereinigungseinheiten, werden entsprechend der eingesetzten Verfahrensvariante realisiert.

### Wege zur Ausführung der Erfindung

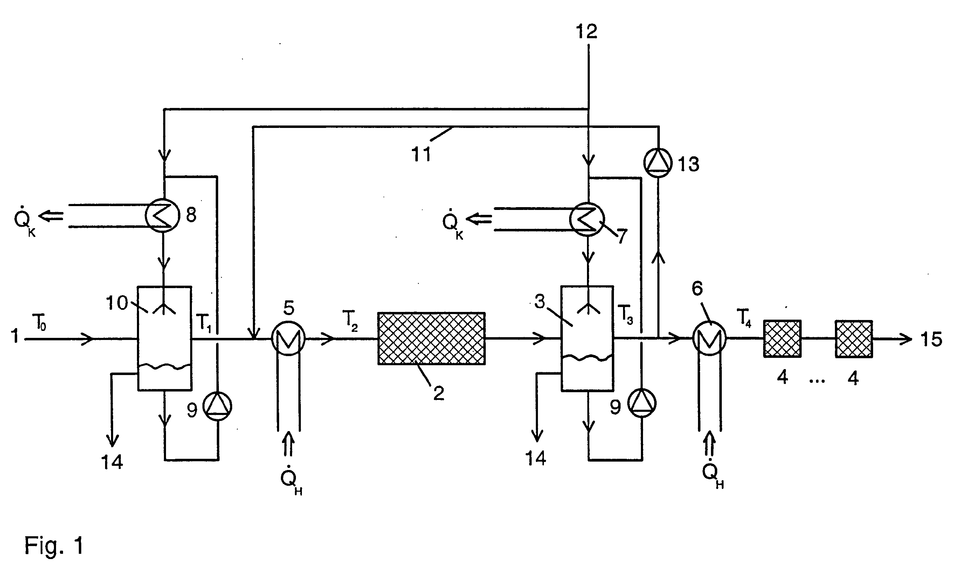

Das vorliegende Verfahren sowie die zugehörige Reinigungsanlage für Faulgase werden nachfolgend anhand eines Ausführungsbeispiels in Verbindung mit der Figur nochmals kurz erläutert. Die Figur zeigt schematisch ein Beispiel für eine Reinigungsanlage zur Durchführung des vorliegenden Verfahrens in einer Ausbaustufe, in der zahlreiche Weiterbildungen der Anlage bzw. des erfindungsgemäßen Verfahrens realisiert sind.

Kern der Anlage ist der Katalysator 2 sowie der dem Katalysator nachgeschaltete Gaswäscher 3. Der Rohgasstrom 1 wird im vorliegenden Beispiel zunächst in einem Wärmetauscher 5, einem Standardwärmetauscher aus der Klima- oder Verfahrenstechnik, auf eine Temperatur T2 vorgewärmt. Die gewählte Temperatur T2 hängt jeweils von Gaszusammensetzung, Reinigungsaufgabe und gewähltem Katalysatormaterial ab und liegt günstigerweise unter 100°C. Es sind jedoch auch Arbeitstemperaturen bis zu 400°C denkbar. Das erwärmte Rohgas 1 wird dann durch die Katalysatoreinheit 2 geleitet, in der höhermolekulare Siloxane in einer Gleichgewichtsreaktion (Shift) in niedermolekulare Verbindungen überführt werden. Als Katalysatormaterial im Katalysator 2 kann vorbehandelte Aktivkohle eingesetzt werden. Die Vorbehandlung kann eine Dotierung oder Mischung mit anderen Stoffen, die die gewünschte Reaktion fördern, einschließen.

Nach Durchlaufen des Katalysators 2 wird das Gas in dem Wäscher 3 mit Kaltwasser gereinigt, wobei die im Katalysator 2 gebildeten wasserlöslichen Substanzen, bspw. Silanole, ausgewaschen werden. Der Wäscher 3 ist im vorliegenden Beispiel mit einem Demister (Nebelabscheider) zur Verhinderung des Flüssigkeitsaustrags im Gasweg ausgestattet. Weiterhin kann er mit einer Umwälzeinrichtung zur Erhöhung des Waschwasserumlaufes unter Einsatz einer Umwälzpumpe 9 ausgerüstet sein. Zur Erzeugung des Kaltwassers wird Frischwasser 12 über einen Waschwasserkühler 7 geleitet, bevor es dem Wäscher 3 zugeführt wird.

Durch eine in diesem Ausführungsbeispiel vorgesehene partielle Gasrückführung 11 über ein Gebläse 13 des aus dem Wäscher 3 austretenden gereinigten Rohgases vor den Katalysator 2 kann der Restgehalt an im gereinigten Rohgas verbliebenen, nicht auswaschbaren Siliziumverbindungen weiter vermindert werden, indem die Shiftreaktion erneut durchlaufen wird.

Soll der Gehalt an Siliziumverbindungen in dem gereinigten Rohgas noch weiter verringert werden, so kann eine Feinreinigung des Gases in einer nachgeschalteten Aktivkohlefiltereinheit bestehend aus einer oder mehreren Aktivkohlefilterstufen 4 erfolgen. Dafür ist eine Verminderung der relativen Feuchte des Gases auf Werte, die in der Regel unter 60% liegen, erforderlich. Dies wird durch erneute Erwärmung um 10 bis 20 K in einem Wärmetauscher 6 auf eine Temperatur T4 erreicht. Durch die optional eingerichtete Gasrückführung 11 kann die Standzeit der Aktivkohlefilter weiter erhöht werden.

Die Reinigungsleistung kann zusätzlich verbessert werden, wenn das Rohgas 1 zunächst vor Eintritt in die Vorwärmung 5 in einer Vorwäsche 10 mit Kaltwasser auf einen Taupunkt von wenig über 0°C abgekühlt wird. Dabei wird es bereits durch partielle Kondensation entfeuchtet und vorgereinigt sowie durch Absorption von allen wasserlöslichen Inhaltsstoffen befreit. Die Einleitung des Rohgases 1 kann bei einer partiellen Gasrückführung 11 auch direkt vor den Wäscher 3 erfolgen, so dass der Vorwäscher 10 in diesem Fall entfallen kann. Der Vorwäscher 10 wird im vorliegenden Beispiel ebenfalls über Frischwasser 12 versorgt, das durch einen Waschwasserkühler 8 abgekühlt wird. Auch hier kann das Waschwasser durch Umpumpen mittels der Umwälzpumpe 9 regelmäßig umgewälzt werden.

Die in diesem Ausführungsbeispiel in der Figur eingetragenen Temperaturen T0 - T4 können in folgenden Temperaturbereichen liegen: T0 im Bereich zwischen 10 und 60°C, T1 im Bereich zwischen 1 und 40° C, T2 im Bereich zwischen 20 und 400°C, T3 im Bereich zwischen 1 und 40°C sowie T4 im Bereich zwischen 10 und 40°C. Die im Einzelfall gewählten Temperaturen hängen von der Gaszusammensetzung sowie dem Katalysatormaterial ab.

Das vorliegende Verfahren ist in Kläranlagen, Biogasanlagen und auf Deponien universell einsetzbar, da Prozesswasser für die Waschvorgänge ausreichend kostengünstig zur Verfügung steht und auch die Entsorgung des beladenen Wassers am Standort ohne Zusatzkosten erfolgen kann. Da der Austrag der ausgewaschenen Siliziumverbindungen größtenteils mit dem Schlamm, dem Abwasser oder durch Verdunstung an die Atmosphäre erfolgt, ist keine Anreicherung der Schadstoffe im Faulgas zu erwarten.

Durch Einsatz von Kaltwasserwäschern 3, 10 kann der sonst zur Kühlung und Entfeuchtung benötigte Wärmetauscher entfallen. Zur Energieeinsparung wird die Abwärme der Kältemaschine in diesem Beispiel für die Gasvorwärmung eingesetzt, wobei lediglich ein geringer Teil an Zusatzwärme für das Erreichen der Eintrittstemperatur T2 am Katalysator 2 benötigt wird. Falls Wärme aus einer Heizungsanlage oder dem Kühlwasserkreis einer Blockheizkraftwärme-Anlage kostengünstig bereit gestellt werden kann, kann auf die Wärmerückgewinnung der Kältemaschine auch verzichtet werden.

Weiterhin wird vorzugsweise ein Wärmeaustausch zwischen abzukühlendem und vorzuwärmenden Medienströmen vorgenommen. Bspw. kann das aus dem Katalysator 2 in den Wäscher eintretende warme Gas durch das aus dem Wäscher 3 austretende kalte Gas vorgekühlt werden.

Grundsätzlich bieten das vorliegende Verfahren sowie die zugehörige Reinigungsanlage den Vorteil, dass sowohl die polaren als auch die unpolaren Siloxanfraktionen nahezu vollständig aus dem Gas entfernt werden können. Gegenüber anderen bekannten Verfahren ergibt sich eine Reduktion der Gesamtkosten, d. h. der Investitionen, Betriebsmittel und des Energieeinsatzes, da weder teure Lösungsmittel noch aufwendige Reinigungsanlagen erforderlich sind. Insbesondere können aufwendige Verfahren zur Entfernung von Schadstoffen aus Gasen, wie bspw. Tiefkältetrocknung oder Druckwechseladsorption, entfallen. Auch eine wirtschaftlichere Nachreinigung mit Aktivkohle kann durchgeführt werden, da bereits ein erheblicher Anteil an Siloxanen aus dem Gas entfernt wurde. Die Aktivkohlefilter werden dadurch wesentlich besser ausgenutzt als bei den bisher bekannten Verfahren zur Faulgasreinigung. Das vorliegende Verfahren ermöglicht den Einsatz preiswerter Standard-Wäscher zur Gasreinigung. Bei Durchführung der Wäsche mit Kaltwasser ist der Einsatz preiswerter, marktüblicher und zuverlässiger Kältemaschinen (Kaltwassersätze) ohne Gefahr des Einfrierens oder die Notwendigkeit des Abtauens oder einer automatischen Klappensteuerung möglich. Das vorliegende Verfahren ist technisch robust, arbeitet mit unterschiedlichen Gaszusammensetzungen und ist gleichermaßen für Deponieund Klärgas einsetzbar. Es ermöglicht eine energiesparende Gasreinigung in Anwendungsfällen, in denen bisher wegen ungünstiger Gaszusammensetzung keine ausreichende Faulgasreinigung erzielt wurde. Es ermöglicht auch die Nutzbarmachung von bisher aufgrund hoher Schadstoffgehalte nicht zur Stromerzeugung verwerteten Gasen. Durch Nutzung der Kältemaschinenabwärme bei Durchführung des Verfahrens mit Kaltwasser lässt sich ein rationeller Energieeinsatz erzielen.

### Bezugszeichenliste

- 1: Rohgas
- 2: Katalysator
- 3: Gaswäscher
- 4: Aktivkohlefilter
- 5: Wärmetauscher
- 6: Wärmetauscher
- 7: Waschwasserkühler
- 8: Waschwasserkühler
- 9: Umwälzpumpe
- 10: Vorwäsche
- 11: Gasrückführung
- 12: Frischwasser
- 13: Gebläse
- 14: Ablauf
- 15: Reingas
- Q_{H}: Wärmezufuhr
- Q_{K}: Kühlung

## Patentansprüche

1. Verfahren zur Reinigung von Faulgasen, bei dem das zu reinigende Rohgas (1) einer Gaswäsche (3) unterzogen wird,
**dadurch gekennzeichnet,**
**dass** vor Durchführung der Gaswäsche (3) höhermolekulare Siliziumverbindungen im Rohgas (1) katalytisch in niedermolekulare Siliziumverbindungen umgewandelt werden und die anschließende Gaswäsche mit einem polaren Lösungsmittel durchgeführt wird.

2. Verfahren nach Anspruch 1,
**dadurch gekennzeichnet,**
**dass** als polares Lösungsmittel Wasser eingesetzt wird.

3. Verfahren nach Anspruch 1 oder 2,
**dadurch gekennzeichnet,**
**dass** als polares Lösungsmittel Kaltwasser, vorzugsweise mit einer Temperatur unter 10° C, eingesetzt wird.

4. Verfahren nach einem der Ansprüche 1 bis 3,
**dadurch gekennzeichnet,**
**dass** das Rohgas (1) für die katalytische Umwandlung durch einen Katalysator (2) geleitet wird.

5. Verfahren nach Anspruch 4,
**dadurch gekennzeichnet,**
**dass** im Katalysator (2) vorbehandelte Aktivkohle als Katalysatormaterial eingesetzt wird.

6. Verfahren nach Anspruch 4 oder 5,
**dadurch gekennzeichnet,**
**dass** durch partielle Rückführung von gereinigtem Rohgas, das nach der Gaswäsche (3) erhalten wird, ein Teil des gereinigten Rohgases erneut durch den Katalysator (2) und die Gaswäsche (3) geleitet wird.

7. Verfahren nach einem der Ansprüche 1 bis 5,
**dadurch gekennzeichnet,**
**dass** nach der Gaswäsche (3) erhaltenes gereinigtes Rohgas einer adsorptiven Nachreinigung unterzogen wird.

8. Verfahren nach Anspruch 7,
**dadurch gekennzeichnet,**
**dass** das gereinigte Rohgas zur adsorptiven Nachreinigung durch einen oder mehrere hintereinander geschaltete Aktivkohlefilter (4) geleitet wird.

9. Verfahren nach einem der Ansprüche 1 bis 8,
**dadurch gekennzeichnet,**
**dass** das Rohgas (1) vor der katalytischen Umwandlung einer Vorwäsche mit Kaltwasser unterzogen wird, bei der es auf eine Temperatur unterhalb von 10° C abgekühlt wird.

10. Reinigungsanlage für Faulgase mit einer Gaswäscheeinheit (3),
**dadurch gekennzeichnet,**
**dass** der Gaswäscheeinheit (3) ein Katalysator (2) für die katalytische Umwandlung höhermolekularer Siliziumverbindungen in niedermolekulare Siliziumverbindungen vorgeschaltet ist.

11. Reinigungsanlage nach Anspruch 10,
**dadurch gekennzeichnet,**
**dass** der Katalysator (2) vorbehandelte Aktivkohle enthält.
